# EUROPÄISCHE PATENTSCHRIFT

(11) **EP 0 603 787 B1**
(45) Veröffentlichungstag und Bekanntmachung des Hinweises auf die Patenterteilung: **25.03.1998**
(21) Anmeldenummer: 93120517.3
(22) Anmeldetag: 20.12.1993
(51) Int. Cl.: C04B 35/593

(54) **Hochtemperaturfeste Siliziumnitridkeramik und Verfahren zu ihrer Herstellung**
High temperature resistant silicon nitride ceramic and method of making it
Céramique en nitrure de silicium ayant une résistance thermique élevée et procédé de sa fabrication

(30) Priorität: 23.12.1992 DE 4243743
(43) Veröffentlichungstag der Anmeldung: 29.06.1994
(73) Patentinhaber: HOECHST AKTIENGESELLSCHAFT, 65929 Frankfurt am Main (DE)
(72) Erfinder: Boberski, Cornelia, Dr., D-65835 Liederbach (DE); Krüner, Hartmut, Dr., D-65817 Eppstein/Taunus (DE); Riedel, Günter, Dr., D-65779 Kelkheim(Taunus) (DE); Hamminger, Rainer, Dr., D-68199 Mannheim (DE)

(56) Entgegenhaltungen:
- EP-A- 0 015 421
- EP-A- 0 227 471

## Beschreibung

Die vorliegende Erfindung betrifft Formteile aus gesinterter Siliziumnitridkeramik, die sowohl bei Raumtemperatur als auch bei hohen Temperaturen hohe Festigkeiten aufweisen und die Si₃N₄ in den kristallinen Phasen der α-und/oder β-Modifikation enthalten.

Siliziumnitrid und daraus durch Sintern hergestellte Bauteile sind bereits in zahlreichen Publikationen beschrieben worden. Aus der JP-A-59018165 ist beispielsweise bekannt, daß eine Mischung von Si₃N₄ mit Y₂O₃ und Al₂O₃ im Gewichtsverhältnis von 94 zu 3 zu 3 bei Temperaturen oberhalb von 1900 °C gasdruckgesintert werden kann und dabei hohe Festigkeiten bei Raumtemperatur erzielt werden können. Das Gewichtsverhältnis von Y₂O₃ zu Al₂O₃ beträgt nach dieser Publikation 1, was bei der Herstellung über einen zweistufigen Drucksinterzyklus bei sehr hohen Temperaturen zwischen 1900 und 1950 °C in Kombination mit einer sehr langen Sinterzeit von insgesamt 4 Stunden aber zu einem Gefüge führt, das bezüglich seiner Kristallitgröße zu grob ist, um für spezielle Anwendungszwecke in der Hochleistungstechnik noch geeignet zu sein.

Aus der JP-A-63139057 ist bekannt, daß Al₂O₃ und Y₂O₃ im Verhältnis von 1:1 zu Siliziumnitrid zugemischt werden können (5 Gew.-% und 5 Gew.-%), allerdings bewirkt die nach dieser Schrift zusätzlich notwendige Anwesenheit von Aluminiumnitrid in einer Menge von 2,1 Gew.-% die Bildung von Sialonen, wodurch die technischen Eigenschaften, insbesondere die Festigkeit, der Siliziumnitridteile nachteilig beeinträchtigt werden.

Die EP-A-197 548 beschreibt, daß 0,5 bis 4 Gew.-% Al₂O₃ und 4 bis 8 Gew.-% Y₂O₃ als Additive zu Siliziumnitrid benutzt werden können, wobei aber ein bestimmtes Gewichtsverhältnis der beiden Additive nicht eingehalten werden muß. Nach dieser Schrift werden allerdings nur 85 bis 97% der theoretisch möglichen Dichte in den Formteilen erreicht.

EP-A-0 227 471 lehrt Artikel aus Siliziumnitrid, die als Additive neben Yttriumoxid auch Verbindungen von Hafnium, Tantal oder Niob enthalten. Vergleichsbeispiele zur Additivkombination Yttriumoxid - Aluminiumoxid zeigen eine stark abfallende Hochtemperaturfestigkeit im Vergleich zur Raumtemperaturfestigkeit.

Die Anwesenheit von HfO₂ als Additiv in Siliziumnitrid ist aus einer weiteren japanischen Publikation, der JP-A-3153574 bekannt. Nach dieser Druckschrift verbindet sich das HfO₂ allerdings mit Yttrium zu Y₂Hf₂O₇.

EP-A-0 015 421 beschreibt ein Verfahren zur Herstellung von Sinterkörpern ausgehend von einer Pulvermischung aus Siliziumnitrid, Yttriumoxid und Aluminiumoxid, die auch mindestens ein Pulver aus Aluminiumnitrid, Titanoxid, Magnesiumoxid und Zirkonoxid enthält.

Aufgabe der vorliegenden Erfindung war es, eine Additivkombination anzugeben, mit der es möglich ist, die Festigkeitseigenschaften gesinterter Formteile aus Siliziumnitrid bei Raumtemperatur und gleichzeitig auch bei Temperaturen oberhalb von 1000 °C weiter zu verbessern sowie ein entsprechendes Herstellungsverfahren für ganz besonders hochtemperaturfeste Bauteile aus Siliziumnitrid bereitzustellen.

Gelöst wird diese Aufgabe durch Formteile der eingangs genannten Gattung, deren Kennzeichenmerkmale darin zu sehen sind, daß sie wenigstens 87 Gew-% Siliziumnitrid und 5 bis 13 Gew.-% einer Additivkombination aus Al₂O₃ und Y₂O₃ enthalten, wobei das Gewichtsverhältnis Y₂O₃/Al₂O₃ im Bereich von 1,1 bis 3,4 liegt, daß sie zusätzlich 0 bis 1,0 Gew.-% HfO₂ und/oder ZrO₂ enthalten können, daß die Formteile eine Dichte von größer als 98 % der theoretisch möglichen Dichte besitzen und daß ihre 4-Punkt-Biegebruchfestigkeit bei Raumtemperatur ≥ 850 MPa und bei einer Temperatur von 1000 °C ≥ 800 MPa ist.

Entgegen der allgemeinen Vorstellung, konnte gezeigt werden, daß Formteile aus Si₃N₄-Keramik mit relativ hohen Al₂O₃-Gehalten ohne Auskristallisation der Glasphase hergestellt werden können und gute Festigkeiten sowohl bei Raumtemperatur als auch bei erhöhten Anwendungstemperaturen bei gleichzeitig hoher Bruchzähigkeit aufweisen. Erfindungsgemäß wird das erreicht durch Bestandteile der amorphen Phase gemäß Anspruch 1.

Durch die in der amorphen Phase gelösten Stoffe wird die Transformationstemperatur T_{G} der amorphen Phase erhöht und/oder deren Viskositäts-Temperatur-Verhalten oberhalb von T_{G} in Richtung auf höhere Festigkeiten der Formteile bei höheren Temperaturen günstig beeinflußt.

Das Gefüge einer Si₃N₄-Keramik wird durch stäbchenförmige Si₃N₄-Kristalle und die Korngrenzenphase aufgebaut. Die Kristalle liegen normalerweise in einer regellosen, rein zufälligen Anordnung vor, die als isotropes Gefüge bezeichnet wird. Zur Charakterisierung des Gefüges werden Probekörper geschliffen, angeätzt und dann optisch mit dem Rasterelektronenmikroskop untersucht, indem Aufnahmen bei 5000-facher und bei 10 000-facher Vergrößerung erstellt werden. Die Aufnahmen werden sodann halbautomatisch ausgewertet. Für jeden Probekörper müssen so etwa 800 bis 1500 Körner ausgewertet werden, wobei jeweils die längste Diagonale eines Korns als Kornlänge L und die kürzeste Diagonale als Kornbreite B definiert werden. Der Streckungsgrad A wird aus dem Verhältnis von L zu B gebildet. Zur Bestimmung des Streckungsgrades werden wenigstens 40 Körner pro Probenkörper mit möglichst parallelen Kornkanten und möglichst großen Kornlängen herausgesucht, damit der Einfluß des Schnitteffektes ausgeglichen wird.

Die erfindungsgemäßen Formteile besitzen vorzugsweise eine Mikrostruktur, bei der ein feinkörniges Gefüge von Siliziumnitrid mit einer Kornanzahl von mehr als 3·10⁶ Körnern/mm² mit einer mittleren Breite der Siliziumnitridkristallite von kleiner als 0,4 µm, einer maximalen Kombreite von höchstens 2 µm und einem Streckungsgrad von größer 8 innerhalb einer fein verteilten amorphen Phase vorliegt, wobei die amorphe Korngrenzenphase zwischen den Si₃N₄-Körnern nicht dicker ist als 0,1 µm.

Die Bruchzähigkeit der erfindungsgemäßen Formteile K_{IC} ist vorzugsweise größer als 9 MPa·√m, ihre mechanische Biegebruchfestigkeit (4-Punkt Biegeprüfung nach DIN 51 110) bei Raumtemperatur ist ≥ 850 MPa und ihre mechanische Biegebruchfestigkeit bei 1000°C ist ≥ 800 MPa. Unter Berücksichtigung der hohen Sinterrohdichte von > 98 % der theoretisch möglichen Dichte liegt der E-Modul im Bereich von 290 bis 320 GPa. Mit dem relativ geringen Wärmeausdehnungskoeffizienten von 3,1·10⁻⁶/K und einer Wärmeleitfähigkeit von 20 W/m·K besitzen die erfindungsgemäßen Formteile eine gute Thermoschockbeständigkeit, quantifiziert durch eine kritische Temperaturdifferenz von ≥ 800 K.

Die erfindungsgemäßen Bauteile eignen sich besonders zur Verwendung im Maschinen- und Anlagenbau sowie als Ventile in Verbrennungsmotoren für Automobile.

Das Verfahren zur Herstellung der erfindungsgemäßen Formteile aus Siliziumnitrid sieht vor, daß zunächst eine Mischung von Si₃N₄ mit einer spezifischen Oberfläche von 2 bis 15 m²/g, einem O₂-Gehalt < 1,5 Gew.-% und einem Anteil an β-Modifikation ≤ 2 Vol.-% mit fein verteiltem Y₂O₃, Al₂O₃, und gegebenenfalls HfO₂ und/oder ZrO₂ hergestellt wird. Der Gesamtadditivgehalt soll erfindungsgemäß zwischen 5 und 13 Gew.-% betragen, bezogen auf das Gesamtgewicht der Mischung. Insbesondere soll der Additivgehalt im Bereich von 8 bis 10,5 Gew.-% liegen. Die Mischung wird dann in einem flüssigen Dispersionsmittel (Wasser oder organisches Lösemittel) gemischt sowie gemahlen und die so hergestellte Suspension wird z.B. in einem Sprühtrockner getrocknet und agglomeriert. Danach wird das erhaltene Agglomerat zu Formteilen gepreßt, gespritzt oder redispergiert und gegossen sowie bei Temperaturen zwischen 1725 und 1850 °C und bei N₂-Drücken zwischen 2 und 8 MPa über einen Zeitraum bis maximal 2 h gasdruckgesintert.

Die nachfolgenden Ausführungsbeispiele sollen die Erfindung für den Fachmann näher erläutern, ohne jedoch als Einschränkung auf die konkret dargestellten Ausführungsformen ausgelegt zu werden.

### Beispiele 1 und 2 (Vergleichsbeispiele)

Es wurden Mischungen von Pulvern aus 87,7 Gew.-% Si₃N₄ (98 % α-Si₃N₄ und 2 % β-Modifikation; O₂-Gehalt < 1,5 Gew.-%, spezifische Oberfläche BET = 11 m²/g), 2,3 Gew.-% Al₂O₃ und 10,0 Gew.-% Y₂O₃ hergestellt. Dies entspricht einem Gesamtadditivgehalt von 12,3 Gew.-% und einem Y₂O₃ : Al₂O₃ Gewichtsverhältnis von 4,35. Diese Mischungen wurden in Ansätzen von 400g in einer Rührwerkskugelmühle mit Al₂O₃-Mahlkugeln und Isopropanol als Dispergiermittel über eine Zeitdauer von 2 h intensiv gemischt und gemahlen. Die Suspension wurde in einem Rotationsverdampfer getrocknet und anschließend über ein Sieb mit 250 µm Maschenweite gesiebt. Die Pulver wurden anschließend bei 300 MPa isostatisch zu Grünkörpern verpreßt.

Die Sinterung erfolgte nach Beispiel 1 drucklos in 0,1 MPa N₂-Atmosphäre, indem über eine Zeitspanne von 1 Stunde die Temperatur auf 1800 °C erhöht wird, dort über eine Zeitspanne von einer Stunde gehalten und dann während weiterer drei Stunden wieder auf Raumtemperatur abgekühlt wird.

Nach Beispiel 2 wird unter einem Gasdruck von 2 MPa über eine Zeitdauer von 30 min gesintert. Die Ergebnisse der Beispiele 1 und 2 sind in Tab. 1 enthalten. Die Anwendung von Gasdruck hat die Hochtemperaturfestigkeiten verbessert. Die Hochtemperaturfestigkeiten lagen bei beiden Proben unter 700 MPa bei relativ hoher Bruchzähigkeit von K_{IC} = 9,2 bzw. 10,1 MPa·√m.

### Beispiele 3 bis 5

Es wurden Mischungen von Pulvern aus 87,7 Gew.-% Si₃N₄ (98 % α-Si₃N₄ und 2 % β-Modifikation; O₂-Gehalt < 1,5 Gew.-%, BET = 11 m²/g), mit verschiedenen Gesamtgehalten an zugegebenen Sinteradditiven und unterschiedlichen Y₂O₃ : Al₂O₃-Verhältnissen hergestellt.

| | Gesamtadd. | Y₂O₃ : Al₂O₃ |
|---|---|---|
| Beispiel 2 (Vergleichsbeispiel) | 12,3 | 4,35 |
| Beispiel 3 (Vergleichsbeispiel) | 10,00 | 3,5 |
| Beispiel 4 (Erfindung) | 8,00 | 2,0 |
| Beispiel 5 (Vergleichsbeispiel) | 6,00 | 1,0 |

Wie im Zusammenhang mit Beispiel 1 beschrieben, wurden die Proben gemischt, gemahlen, getrocknet und Formkörper geformt sowie gasdruckgesintert. Die Ergebnisse sind in Tab. 2 zusammengefaßt.

Eine ausreichend gute Verdichtung wurde nur in Beispiel 4 und 2 erreicht, wobei Beispiel 4 der Erfindung entspricht und sich gegenüber Beispiel 2 (Vergleichsbeispiel nach dem Stand der Technik gemäß Boberski et al., mechanical properties of gas pressure sintered silicon nitride, in Proceedings of 4th internat. Symp. of Ceramic Material and Components for Engines, Göteborg 1991) dadurch unterscheidet, daß der Gesamtadditivgehalt reduziert wurde und das Y₂O₃ : Al₂O₃-Verhältnis auf 2 erniedrigt wurde.

Die Biegebruchfestigkeit der Probe nach Beispiel 4 betragt bei 1000 °C 800 MPa. Diese Proben zeichnen sich weiterhin dadurch aus, daß sie einen hohen K_{IC}-Wert von 10,5 MPa·√m aufweisen. Die Gefügemerkmale im einzelnen sind in Tabelle 2 angegeben.

Neben Si₃N₄ liegt eine amorphe Korngrenzenphase vor. Die außerordentlich guten Hochtemperatureigenschaften wurden durch die Wahl der geeigneten Additivverhältnisse sowie die Anwendung eines darauf abgestimmten Gasdrucksinterprogramms erreicht, das zur Einstellung des erfindungsgemäßen Gefüges führt.

### Beispiele 6, 7 und 8

Zur Variation der Gesamtadditivmenge bei konstantem Y₂0₃/Al₂0₃-Verhältnis werden Mischungen von Pulvern aus Si₃N₄ (98% α-Si₃N₄ und 2% β-Si₃N₄, O₂-Gehalt < 1,5 Gew.-%; BET = 11 m²/g) mit unterschiedlichen Gesamtgehalten, aber bei konstantem Verhaltnis von Y₂O₃ zu Al₂O₃ = 2 hergestellt. Außerdem wurden zur Änderung der liquiden Phase (Viskosität) wahrend des Sinterns 0,2 Gew.-% ZrO₂ bzw. 0,4 Gew.-% HfO₂ und als Vergleich 0,2 Gew.-% CaO zugegeben.

| | Zusatz zur Glasphase | Gesamtadditivgehalt |
|---|---|---|
| Beispiel 6 (Vergleichsbeispiel) | 0,2 Gew.-% CaO | 6,0 Gew.-% |
| Beispiel 4 (Erfindung) | --- | 8,0 Gew.-% |
| Beispiel 7 (Erfindung) | 0,4 Gew.-% HfO₂ | 10,4 Gew.-% |
| Beispiel 8 (Erfindung) | 0,2 Gew.-% ZrO₂ | 12,5 Gew.-% |

Wie unter Beispiel 1 und 2 beschrieben, wurden die Proben gemischt, gemahlen, getrocknet und zu Formkörpern gepreßt, sowie gasdruckgesintert. Die Ergebnisse sind in Tab. 3 zusammengefaßt. Eine ausreichend gute Verdichtung wurde für Beispiel 6 nicht erreicht; das bedeutet, daß bei den gewählten Zusammensetzungen und Gasdrucksinterbedingungen keine genügend hohe Verdichtung erreicht werden konnte, um eine gute Festigkeit zu garantieren. Bei dem geringen Additivgehalt von 6 Gew. % müssen daher andere Verdichtungsbedingungen ausgewählt werden. Die Zugabe von HfO₂ (Beispiel 7) bei einem etwas erhöhten Gesamtadditivgehalt hat neben einer exzellenten Verdichtung zu sehr guten Hochtemperatureigenschaften geführt und ergab 869 MPa bei 1000° C. Die Probe zeichnet sich auch dadurch aus, daß das Si₃N₄ sowohl in α- als auch in β-Modifikation vorliegt. HfO₂ liegt gelöst in der Glasphase vor, da keine hafniumhaltige kristalline Phase neben Si₃N₄ im Röntgenbeugungsspektrum nachgewiesen werden konnte. Auch die Zugabe von ZrO₂ (Beispiel 8) führte zu guten Hochtemperatureigenschaften.

**Tabelle 1**

| Zusammensetzung, Sinterbedingungen und Ergebnisse zum Stand der Technik | | |
|---|---|---|
| Beispiel | Nr. 1 | Nr. 2 |
| Zusammensetzung [Gew.-%]: | | |
| - Si₃N₄ | 87,71 | 87,71 |
| - Al₂O₃ | 2,28 | 2,28 |
| - Y₂O₃ | 10,01 | 10,01 |
| - Gesamtadditivgehalt | 12,29 | 12,29 |
| - Y₂O₃/Al₂O₃ | 4,4 | 4,4 |

| Sinterbedingungen | | |
|---|---|---|
| - Temperatur [°C] | 1800 | 1750 |
| - N₂-Druck [MPa] | 0,1 | 2 |
| - Haltezeit [h] | 1 | 0,5 |
| Dichte [% d.th.Dichte] | 98,5 | 98,9 |
| kristalliner Phasenbestand | β-Si₃N₄ | β-Si₃N₄ |

| Biegebruchfestigkeit* [MPa] | | |
|---|---|---|
| - bei 25°C¹⁾ | 720 | 771 |
| - bei 1000°C²⁾ | 545 | 699 |
| Bruchzähigkeit K_{IC} [MPa·√m] | 9,2 | 10,1 |

| Gefügeparameter: | | |
|---|---|---|
| Streckungsgrad | 6,0 | 7,5 |
| Kornanzahl pro Fläche [10⁺⁶/mm²] | 1,0 | 4,0 |
| mittlere Kornbreite [µm] | 0,6 | 0,5 |

| | | |
|---|---|---|
| * Die Biegebruchfestigkeit wurde bestimmt nach DIN 51110 | | |
| K_{IC}: wurde bestimmt mit der Kerbmethode nach DIN 51 109 (Kerbtiefe = 1/3 der Probenhöhe) | | |
| ¹⁾ gemittelt aus mindestens 6 Meßwerten | | |
| ²⁾ gemittelt aus mindestens 3 Meßwerten | | |

**Tabelle 2**

| Zusammensetzung, Sinterbedingungen und Ergebnisse der Beispiele 3 bis 5 (Nr. 3 und 5 sind Vergleichsbeispiele) | | | |
|---|---|---|---|
| Beispiele | Nr.3 | Nr.4 | Nr.5 |
| Zusammensetzung [Gew.-%]: | | | |
| - Si₃N₄ | 89,95 | 92,00 | 94,00 |
| - Al₂O₃ | 2,28 | 2,67 | 3,00 |
| - Y₂O₃ | 7,77 | 5,33 | 3,00 |
| - Gesamtadditivgehalt | 10,00 | 8,00 | 6,00 |
| - Y₂O₃/Al₂O₃ | 3,5 | 2,0 | 1,0 |

| Sinterbedingungen: | | | |
|---|---|---|---|
| - Temperatur [°C] | 1800 | 1725 | 1850 |
| - N₂-Druck [MPa] | 2 | 8 | 8 |
| - Haltezeit[h] | 1,5 | 1,5 | 0,5 |
| Dichte [% d.th.Dichte] | 94,6 | 99,99 | 97,9 |
| kristalliner Phasenbestand | β-Si₃N₄ | β-Si₃N₄ | β-Si₃N₄ |

| Biegebruchfestigkeit* [MPa] | | | |
|---|---|---|---|
| - bei 25°C¹⁾ | 798 | 983 | 724 |
| - bei 1000°C²⁾ | 601 | 800 | 579 |
| Bruchzähigkeit K_{IC} [MPa·√m] | 8,9 | 10,5 | 8,2 |

| Gefügeparameter: | | | |
|---|---|---|---|
| -Streckungsgrad | 8,0 | 9,7 | 8,5 |
| -Kornanzahl [10⁶/mm²] | 2,0 | 4,5 | 3,5 |
| -mittlere Kornbreite [µm] | 0,5 | 0,2 | 0,3 |

| | | | |
|---|---|---|---|
| * Die Biegebruchfestigkeit: wurde bestimmt nach DIN: 51 110 | | | |
| K_{IC}: wurde bestimmt mit der Kerbmethode nach DIN 51 109 (Kerbtiefe = 1/3 der Probenhöhe) | | | |
| ¹⁾ gemittelt aus mindestens 6 Meßwerten | | | |
| ²⁾ gemittelt aus mindestens 3 Meßwerten | | | |

**Tabelle 3**

| Zusammensetzung, Sinterbedingungen und Ergebnisse der Beispiele 6 bis 8 (Nr. 6 ist ein Vergleichsbeispiel) | | | |
|---|---|---|---|
| Beispiel | Nr.6 | Nr.7 | Nr.8 |
| Zusammensetzung [Gew.-%]: | | | |
| - Si₃N₄ | 93,80 | 89,61 | 87,51 |
| - Al₂O₃ | 2,00 | 3,33 | 4,10 |
| - Y₂O₃ | 4,00 | 6,66 | 8,20 |
| - Zusatz | 0,2 CaO | 0,4 Hf0₂ | 0,2 ZrO₂ |
| - Gesamtadditivgehalt | 6,2 | 10,4 | 12,5 |
| - Y₂O₃/Al₂O₃ | 2,0 | 2,0 | 2,0 |

| Sinterbedingungen | | | |
|---|---|---|---|
| - Temperatur [°C] | 1800 | 1750 | 1850 |
| - N₂-Druck [MPa] | 2 | 8 | 2 |
| - Haltezeit [h] | 0,5 | 0,5 | 1,5 |
| Dichte [% d.th.Dichte] | 92,0 | 99,1 | 98,5 |
| kristalliner Phasenbestand | β-Si₃N₄ | 11% α-Si₃N₄ | β-Si₃N₄ |
| | | 89% β-Si₃N₄ | |

| Biegebruchfestigkeit* [MPa] | | | |
|---|---|---|---|
| -bei 25°C¹⁾ | 707 | 1045 | 853 |
| -bei 1000°C²⁾ | 566 | 869 | 805 |
| Bruchzähigkeit K_{IC} [MPa·√m] | 7,6 | 9,5 | 10,0 |

| Gefügeparameter: | | | |
|---|---|---|---|
| -Streckungsgrad | 7,5 | 12,2 | 11,5 |
| -Kornanzahl [10⁶/mm²] | 4,0 | 6,1 | 5,0 |
| -mittlere Kornbreite [µm] | 0,45 | 0,15 | 0,25 |

| | | | |
|---|---|---|---|
| * Die Biegebruchfestigkeit wurde bestimmt nach DIN: 51 110 | | | |
| K_{IC}: wurde bestimmt mit der Kerbmethode nach DIN 51 109 (Kerbtiefe = 1/3 der Probenhöhe) | | | |
| ¹⁾ gemittelt aus mindestens 6 Meßwerten | | | |
| ²⁾ gemittelt aus mindestens 3 Meßwerten | | | |

## Patentansprüche

1. Formteil aus gesinterter Siliziumnitridkeramik, das hohe mechanische Festigkeit aufweist und Si₃N₄ in den kristallinen Phasen der α- und/oder β-Modifikation enthält, dadurch gekennzeichnet, daß es wenigstens 87 Gew.- % Siliziumnitrid und 5 bis 13 Gew.-% einer Additivkombination aus Al₂O₃ und Y₂O₃ enthält, wobei das Gewichtsverhältnis Y₂O₃/Al₂O₃ im Bereich von 1,1 bis 3,4 liegt, daß es zusätzlich 0 bis 1,0 Gew.-% HfO₂ und/oder ZrO₂ enthalten kann, daß das Formteil eine Dichte von größer als 98 % der theoretisch möglichen Dichte besitzt und daß seine 4-Punkt-Biegebruchfestigkeit bei Raumtemperatur ≥ 850 MPa und bei einer Temperatur von 1000 °C ≥ 800 MPa ist.

2. Formteil nach Anspruch 1, dadurch gekennzeichnet, daß es eine Bruchzähigkeit K_{IC} ≥ 8 MPa·√m besitzt.

3. Formteil nach Anspruch 1 oder 2, dadurch gekennzeichnet, daß die Siliziumnitridkeramik eine Kornanzahl pro Flächeneinheit von größer 3·10⁶ Körner/mm² aufweist, wobei die Körner eine mittlere Kornbreite ≤ 0,4 µm, eine maximale Kornbreite ≤ 2µm und einen Streckungsgrad von ≥ 8 aufweisen.

4. Formteil nach einem der Ansprüche 1 bis 3, dadurch gekennzeichnet, daß es eine feine Verteilung der Korngrenzenphase besitzt entsprechend einer amorphen Korngrenzenphase zwischen Si₃N₄-Körnern von nicht dicker als 0,1 µm.

5. Formteil nach einem der Ansprüche 1 bis 4, dadurch gekennzeichnet, daß es eine Bruchzähigkeit K_{IC} von größer als 9 MPa·√m besitzt und eine mechanische Biegebruchfestigkeit bei Raumtemperatur von ≥ 950 MPa.

6. Verfahren zur Herstellung eines Formteils aus gesintertem Siliziumnitrid nach einem der Ansprüche 1 bis 5, dadurch gekennzeichnet, daß zunächst eine Mischung von Si₃N₄ mit einer spezifischen Oberfläche BET im Bereich von 2 bis 15 m²/g, mit einem O₂-Gehalt < 1,5 Gew.-% und einem Gehalt an β-Modifikation ≤ 2 Vol.-% mit fein verteiltem Y₂O₃ und Al₂O₃ hergestellt wird und zusätzlich 0 bis 1,0 Gew.-% HfO₂ und/oder ZrO₂ enthalten kann, wobei der Gesamtadditivgehalt im Bereich von 5 bis 13 Gew.-% liegt, bezogen auf das Gesamtgewicht der Mischung, daß die Mischung dann in einem flüssigen Dispersionsmittel gemischt und gemahlen und die so hergestellte Suspension getrocknet und agglomeriert wird und daß danach das erhaltene Agglomerat zu Formkörpern gepreßt, gespritzt oder redispergiert und gegossen sowie bei Temperaturen zwischen 1725 und 1850 °C bei N₂-Drücken zwischen 2 und 8 MPa über einen Zeitraum bis maximal 2 h gasdruckgesintert wird.

7. Verfahren nach Anspruch 6, dadurch gekennzeichnet, daß der Gesamtadditivgehalt im Bereich von 8 bis 10,5 Gew.-% liegt.

8. Verwendung von Formteilen nach einem der Ansprüche 1 bis 5 im Maschinen- und Anlagenbau sowie als Ventile in Verbrennungsmotoren für Automobile.

## Claims

1. A shaped part of sintered silicon nitride ceramic which has high mechanical strength and contains Si₃N₄ in the crystalline phases of the α and/or β form, wherein the shaped part comprises at least 87% by weight of silicon nitride and from 5 to 13% by weight of an additive combination of Al₂O₃ and Y₂O₃, the Y₂O₃/Al₂O₃ weight ratio being in the range of from 1.1 to 3.4, the shaped part can additionally contain from 0 to 1.0% by weight of HfO₂ and/or ZrO₂, the shaped part has a density of greater than 98% of the theoretically possible density and its 4 point flexural breaking strength is ≥ 850 MPa at room temperature and ≥ 800 MPa at a temperature of 1000°C.

2. A shaped part as claimed in claim 1, which has a fracture toughness K_{IC} of ≥ 8 MPa·√m.

3. A shaped part as claimed in claim 1 or 2, wherein the silicon nitride ceramic has a number of grains per unit area of greater than 3·10⁶ grains/mm², the grains having an average grain width of ≤ 0.4 µm, a maximum grain width of ≤ 2 µm and an aspect ratio of ≥ 8.

4. A shaped part as claimed in any one of claims 1 to 3, which has a fine division of the grain boundary phase corresponding to an amorphous grain boundary phase between the Si₃N₄ grains of no thicker than 0.1 µm.

5. A shaped part as claimed in any one of claims 1 to 4, which has a fracture toughness K_{IC} of greater than 9 MPa·√m and a mechanical flexural breaking strength at room temperature of ≥ 950 MPa.

6. A process for producing a shaped part of sintered silicon nitride as claimed in any one of claims 1 to 5, which comprises first preparing a mixture of Si₃N₄ having a BET specific surface area in the range of from 2 to 15 m²/g, having an O₂ content of < 1.5% by weight and a β form content of ≤ 2% by volume with finely divided Y₂O₃ and Al₂O₃, with the mixture being able to further comprise from 0 to 1.0 % by weight of HfO₂ and/or ZrO₂, the total additive content being in the range of from 5 to 13% by weight, based on the total weight of the mixture, then mixing and milling the mixture in a liquid dispersion medium and drying and agglomerating the suspension so produced and subsequently pressing, injection molding or redispersing and casting the agglomerated material obtained to make shaped parts and sintering these under gas pressure at temperatures between 1725 and 1850°C at N₂ pressures between 2 and 8 MPa for a period of up to 2 h.

7. The process as claimed in claim 6, wherein the total additive content is in the range of from 8 to 10.5% by weight.

8. A method of using shaped parts as claimed in one of claims 1 to 5 in machine and plant construction and as valves in combustion engines for automobiles.

## Revendications

1. Pièce façonnée en céramique frittée de nitrure de silicium qui présente une résistance mécanique élevée et qui contient Si₃N₄ dans les phases cristallines des modifications α et/ou β, caractérisée en ce qu'elle contient au moins 87 % en masse de nitrure de silicium et de 5 à 13 % en masse d'une combinaison d'additifs de Al₂O₃ et Y₂O₃, le rapport pondéral de Y₂O₃/Al₂O₃ étant dans l'intervalle de 1,1 à 3,4, en ce qu'elle peut contenir en plus de 0 à 1,0 % en masse de HfO₂ et/ou de ZrO₂, en ce que la pièce façonnée a une densité supérieure à 98 % de la densité théorique et en ce que sa résistance à la rupture en flexion 4 points à la température ambiante est ≥850 MPa et à une température de 1000 °C ≥800 MPa.

2. Pièce façonnée selon la revendication 1, caractérisée en ce qu'elle possède une ténacité à la rupture de K_{IC} ≥8 MPa·√m.

3. Pièce façonnée selon la revendication 1 ou 2, caractérisée en ce que la céramique en nitrure de silicium a un nombre de grains par unité de surface supérieur à 3 × 10⁶ grains/mm², les grains ayant une largeur moyenne de grains de ≤0,4 µm, une largeur de grains maximale de ≤2 µm et un degré d'allongement ≥8.

4. Pièce façonnée selon l'une des revendications 1 à 3, caractérisée en ce qu'elle possède une division fine de l'interface des grains correspondant à une interface des grains amorphes entre les grains de Si₃N₄ qui a une épaisseur pas plus de 0,1 µm.

5. Pièce façonnée selon l'une des revendications 1 à 4, caractérisée en ce qu'elle possède une ténacité à la rupture K_{IC} supérieure à 9 MPa· √m et une résistance mécanique à la rupture en flexion à la température ambiante ≥950 MPa.

6. Procédé de préparation d'une pièce faconnée en nitrure de silicium fritté selon l'une des revendications 1 à 5, caractérisé en ce que l'on prépare d'abord un mélange de Si₃N₄ ayant une surface spécifique BET dans l'intervalle de 2 à 15 m²/g, une teneur en O₂ <1,5 % en masse et un taux en modification β ≤2 % en volume avec Y₂O₃ et Al₂O₃ finement divisés et en plus pouvant contenir en plus de 0 à 1,0 % en masse de HfO₂ et/ou ZrO₂, la teneur totale en additifs, par rapport au poids total du mélange étant dans l'intervalle de 5 et 13 % en masse, en ce que l'on mélange et l'on broie le mélange dans un agent dispersant liquide, et on sèche et agglomère la suspension ainsi préparée, et ensuite on comprime l'agglomérat obtenu ensuite en pièces faconnées, on projette ou on redisperse et on coule à des températures comprises entre 1725 et 1850 °C, on fritte sous charge à des pressions de N₂ comprise entre 2 et 8 MPa en l'espace de 2 heures maximum.

7. Procédé selon la revendication 6, caractérisé en ce que la teneur totale en additifs est dans l'intervalle de 8 à 10,5 % en masse.

8. Utilisation des pièces faconnées selon une des revendications 1 à 5, dans la construction de machines et d'installations, ainsi que comme valves dans les moteurs à combustion pour automobile.
